(19) **Europäisches Patentamt**

**European Patent Office**

**Office européen des brevets**

(11) Publication number : **0 384 582 B1**

(12) # EUROPEAN PATENT SPECIFICATION

(45) Date of publication of patent specification :
28.10.92 Bulletin 92/44

(51) Int. Cl.⁵ : **B23K 26/00**

(21) Application number : **90300835.7**

(22) Date of filing : **26.01.90**

(54) Treatment of a surface by laser energy.

(30) Priority : **16.02.89 GB 8903525**

(43) Date of publication of application :
**29.08.90 Bulletin 90/35**

(45) Publication of the grant of the patent :
**28.10.92 Bulletin 92/44**

(84) Designated Contracting States :
**BE DE ES FR GB IT**

(56) References cited :
**CH-A- 599 827**

(73) Proprietor : **The Wiggins Teape Group Limited
P.O. Box 88 Gateway House Basing View
Basingstoke Hampshire RG21 2EE (GB)**

(72) Inventor : **Henderson, Andrew Roy
5 Hall End
Milton, Cambridge CB4 4AQ (GB)**
Inventor : **Jones, Robert
19 Magrath Avenue
Cambridge CB4 3AH (GB)**

(74) Representative : **Allam, Peter Clerk et al
LLOYD WISE, TREGEAR & CO. Norman House
105-109 Strand
London WC2R 0AE (GB)**

## Description

This invention relates to the treatment of the surface of a material by laser energy and is concerned with a method and apparatus for such treatment. One particular application of the invention is to the marking of the surface of a web of paper by application thereto of laser energy. Such marking may be the application to the web of a repeated logo or other visual mark short of perforating the web or producing an undue charring of the paper that would be aesthetically unacceptable. However, the principles of the invention are considered to be of more general utility in cases where a surface of a material is treated by scanning a laser beam thereover to effect a change at the surface. Such change may or may not be visible.

One such use of laser energy involves the scanning of a beam relative to the web surface to produce a "mark" having both length in the scanning direction and a significant width transverse to this direction. The width may be several millimeters. The mark, logo or whatever applied to the material surface may be made with the aid of a mask or stencil and should present a uniform appearance. This requires seeking a uniformity of effect from the delivery of the scanning laser energy.

An example of marking a paper web by a laser beam with the aid of an image-bearing mask is disclosed in European patent specification EP-A 0279505. In this specification, it is shown how a laser beam may be brought to a line focus, the line extending the required width in the direction transverse to the scan direction. In the embodiments disclosed in that specification the mask is scanned past the fixed line provided by the beam.

Copending European patent application 89301486.0 filed 16th February, 1989 and published under the number EP-A 0329438 on 23rd August, 1989 discloses another arrangement using a laser beam for marking a web with the aid of a mask or stencil. In this case an unfocussed, but collimated, laser beam is employed. The beam has a cross-section whose diameter satisfies the width requirement of the image transverse to the direction of scan.

The present invention has arisen out of work done in investigating the uniformity of marking obtained when a laser beam is scanned relative to the surface of a material, and more particularly the uniformity in the direction normal to the scan direction. More generally this has led to the consideration of obtaining a uniform treatment of the surface or surface zone of a material by scanning a laser beam thereover in which energy is applied over a significant width transverse to the scan direction.

At the same time as seeking to achieve this uniformity, it is desirable to achieve an efficient utilisation of the beam and to avoid having to use a laser of unduly excessive power. Take for example, a beam having a simple circularly symmetrical, Gaussian distribution, i.e. a $TEM_{00}$ mode beam. It has a high central peak of irradiance rapidly dropping to low irradiance levels away from the centre. It will be readily appreciated that the strip irradiated by such a beam on sweeping a surface will receive a far greater total exposure where the peak sweeps than at the lateral margins. More uniform exposure can be achieved by truncating the beam - that is masking off the lateral portions - to concentrate on the central area. This reduces the width of strip treated as well as wasting a substantial portion of the beam power. If the beam diameter is increased to make up for the lost width, then a higher power laser is required to achieve the same irradiance in the active portion of the beam.

We shall describe hereinafter how by proper selection of the operating mode of the laser, and specifically by use of a ring mode laser, it is possible to achieve a substantially uniform delivery of energy across a major proportion of the scanned width of an untruncated beam. That is to say that the efficiency of utilisation of the beam is good if the beam is truncated to the appropriate proportion; or put another way for a given width scanned, the required power of the laser may be kept to a minimum for the surface treatment required. More particularly, it has now been discovered that to achieve these desirable results the rate of scan of the beam should be such as to result in an integrated effect on the material treated to which the name "exposure integration" is given.

According to one aspect of the present invention there is provided a method of treating the surface of material with laser energy in which a laser beam is scanned relative to the surface, characterised in that:
the laser beam is unfocussed at the surface,
the cross-section of the beam at the surface has a significant width transverse to the direction of scan,
the cross-section of the beam at the surface exhibits an intensity distribution distinctive of the propagation mode structure of the beam,
the mode structure comprises a ring mode, and
the scanning velocity of the beam relative to the material is such that at any scanned point on the surface, the thermal energy generated is a function of the integral of the beam irradiance profile acting at that point as the beam traverses the point.

In another aspect of the invention, there is provided a method of treating the surface of material with laser energy in which a laser beam is scanned relative to the surface, characterised in that:
the laser beam is unfocussed at the surface,
the cross-section of the beam at the surface has a significant width transverse to the direction of scan,
the cross-section of the beam at the surface exhibits an intensity distribution distinctive of the propagation mode structure of the beam,

the mode structure comprises a ring mode, and

the scanning velocity of the beam relative to the material is such that at any scanned point on the surface, the exposure duration is sufficiently short to ensure that the point responds to the integrated energy derived from the beam irradiance profile acting at that point as the beam traverses the point.

The ring mode structure referred to in the above defined methods may be circularly symmetrical. Preferably the intensity distribution of the mode structure comprises an outer ring and a central peak. This mode structure may be achieved by the combination of $TEM_{00}$ and $TEM_{01}*$ modes.

A specific application of the invention to the treatment or imaging of paper and the laser power used is below a level at which significant charring occurs. Present experience indicates that were the material is paper, the exposure duration should be not more than 10 milliseconds.

In yet another aspect of the invention, there is provided apparatus for treating the surface of a material with laser energy comprising:

a laser providing a beam with a ring mode structure,

a material surface receiving location,

means for directing the laser beam to said location as a non-focussed beam having a significant dimension in a predetermined direction,

means for effecting a relative scanning motion between the beam and a material surface received at said location in a direction substantially normal to said predetermined direction, said scanning-effecting means providing a scanning velocity such that at any scanned point on the material surface, the thermal energy generated is a function of the integral of the beam irradiance profile acting at that point.

In the above apparatus the laser beam may be circularly symmetrical. A preferred ring mode structure has an outer ring encircling a central peak. This structure may be achieved by the combination of $TEM_{00}$ and $TEM_{01}*$ modes.

Preferably for paper at least, the scanning-effecting means provides an exposure duration for any scanned point that is not more than 10 milliseconds.

This invention and its practice will be further described with reference to the accompanying drawings in which;

Fig. 1 shows a laser beam scanning the surface of a material to be treated, and the profile of a diametric intensity distribution for the beam;

Fig. 2A shows a representation of the beam intensity as a three-dimensional figure;

Fig. 2B shows an energy distribution curve across the width of the strip on the surface scanned by the beam;

Fig. 3A shows a preferred irradiance profile for the laser beam;

Fig. 3B illustrates the positions of the profiles illustrated in Fig. 4;

Figs. 4A to 4D shows irradiance profiles for four different "slices" through the beam;

Fig. 5 is a graph showing the power distribution profile for the z-direction slices through a beam having the diametric irradiance profile of Fig. 3A;

Fig. 6 is a graph showing the accumulation of radiant exposure as points on the surface are scanned with the slice irradiance profiles of Fig. 4A to 4D;

Fig. 7 shows slice profiles through a ring-mode beam having a central zero irradiance;

Fig. 8 is a graph similar to that of Fig. 5 for the beam of Fig. 7;

Fig. 9 shows a graph similar to that of Figs. 5 and 8 for a beam having a theoretical "top-hat" profile; and

Fig. 10 shows one diagrammatic example of apparatus embodying this invention.

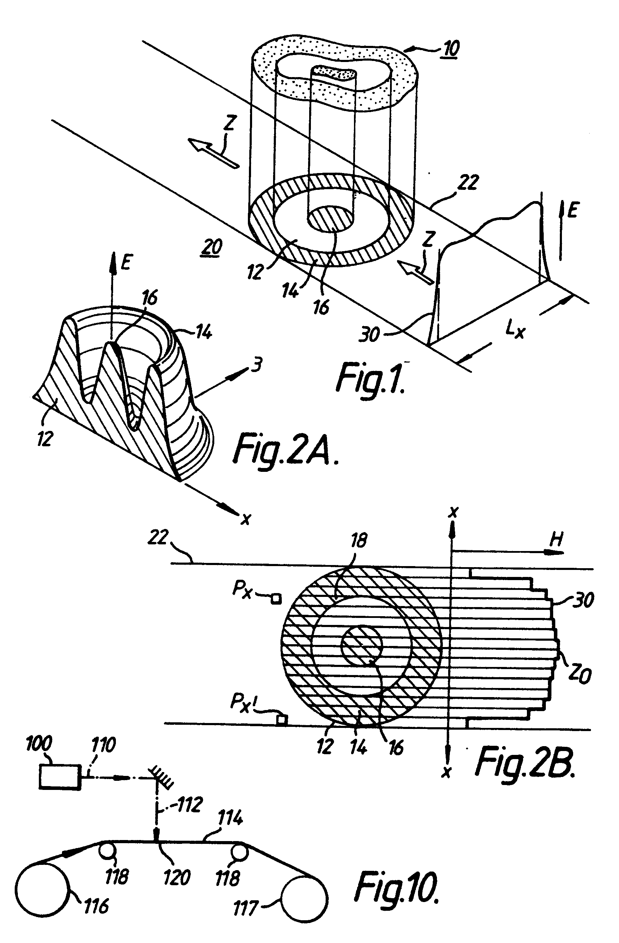

Fig. 1 shows a laser beam 10 sweeping across the surface 20 of a material to sweep a path 22 of width Lx, which in this example is equal to the diameter d of the beam. The beam is swept in the direction of arrows Z. The manner in which the relative movement between beam and the material surface is achieved is not relevant to this discussion. It is assumed the beam impinges substantially normally to the material surface. The beam may be utilized to apply a logo to the surface 20 by sweeping it across a mask or stencil such as that seen in Fig. 10 of EP-A 0279505. However, the following discussion is concerned generally with the energy delivered to points across the width of path 22.

The beam 10 illustrated is an example of a ring mode of operation of the laser source. The cross-section 12 of the beam is shown in a simplified form as having an outer peripheral ring 14 and an inner central peak 16. The irradiance distribution of the beam is circularly symmetrical in a cross-section through the beam and this form of beam can be realised by a laser operating in a $TEM_{00} + TEM_{01}*$ mode. The $TEM_{00}$ mode produces the central peak, the $TEM_{01}*$ mode produces the outer ring. A diametric beam integrated energy profile 30 is shown upstanding from path 22. The integrated energy distribution is illustrated and discussed more fully below. In this description the irradiance (power density) of the beam will be denoted by E (in $W/m^2$). The direction of beam sweep will be denoted by $\underline{z}$ and the transverse direction by $\underline{x}$.

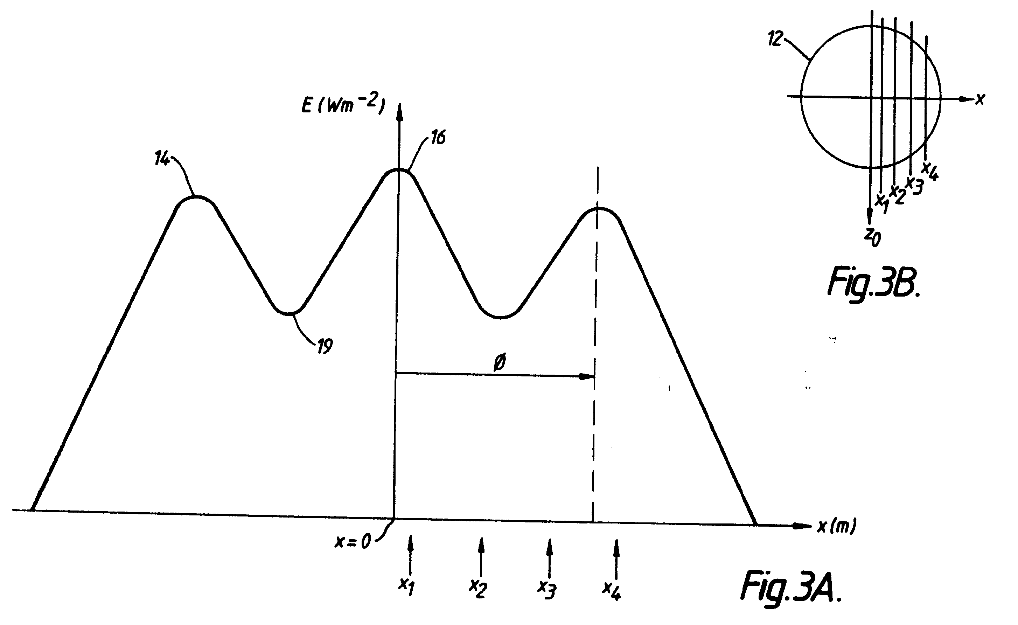

Fig. 2A illustrates one half of a typical irradiance distribution as a three-dimensional profile. The diametric slice taken across the profile is plotted in Fig. 3A. Fig. 2B shows the simplified beam cross-section 12 sweeping along path 22. To the right of the figure a curve is plotted in stepwise increments for the total energy density or radiant exposure H (in Joules/m$^2$) delivered to any point such as $P_x$ in the path of the beam lying at a distance $x$ from the central longitudinal axis $z_o$. Because the beam is symmetrical, $x = 0$ will be taken to lie on axis $z_o$ and distances $x$ measured as offset distances from this axis: in some of the later description $x$ is expressed as a fraction of beam radius. The energy delivered to any point $P_x$ - represented as a small area of finite width in the $x$ direction - is proportional to the integral of the slice 18 in the z-axis direction through the beam irradiance distribution of Fig. 2A that traverses $P_x$ during the sweep. What curve 30 shows is that the energy delivered is remarkably uniform over a substantial proportion of the width Lx, i.e. the beam diameter d. The energy delivered only drops at the extremities where the profile slice acting on a point such as P'x becomes almost tangential to the beam. It will be appreciated that the margins of the beam where the total energy delivered drops can be masked off to truncate the beam cross-section in the $x$ direction to that portion at which the near uniform energy delivery is obtained.

Turning now to a more specific example, Fig. 3A shows a diametric slice through the beam irradiance (E) distribution for a combined $TEM_{00}$ and $TEM_{01}*$ modes such as illustrated in Fig. 2A. The central peak 16 has an amplitude approximating the peak amplitude of the ring 14. The diameter of the peak of the outer ring is denoted ø. In contrast to the simplified diagrams, it will be seen that the fall away of the central peak and of the outer ring from the peak values is such that between the two is a valley 19 whose minimum amplitude is still substantial. In the case illustrated it is somewhat in excess of half the peak value. The profile in Fig. 3A is for the irradiance of the beam along the diametric axis $x$ in Fig. 3B.

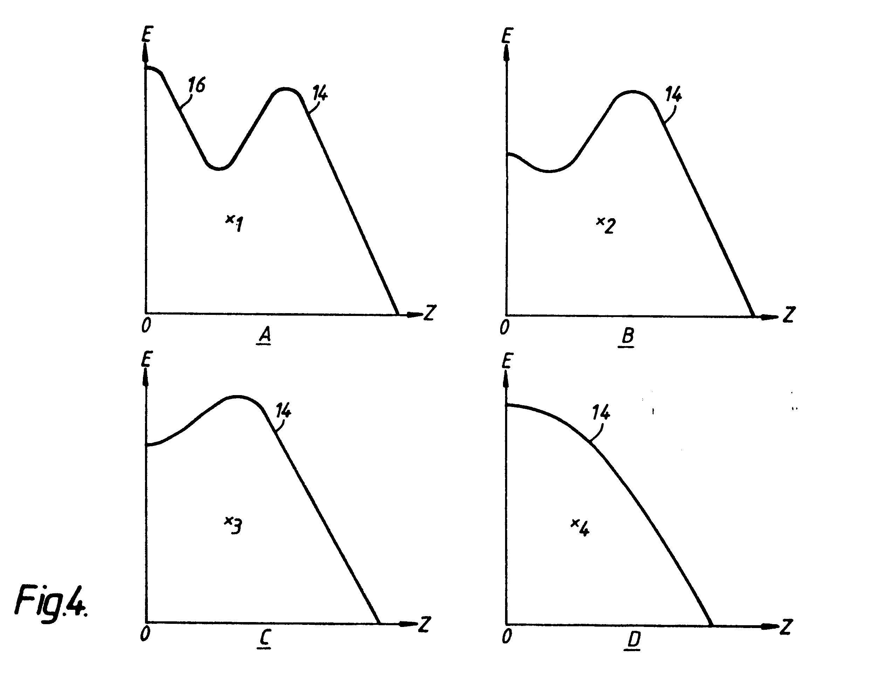

Figs. 4A to 4D show irradiance profiles taken along z-axis directed slices at distances $x_1$, $x_2$, $x_3$ and $x_4$ respectively from the central axis $z_0$ ($x = 0$). These slices are shown in Fig. 3B. In fact what is shown in each case is a half-profile: the complete profile is symmetric about the diametric x-axis of Fig. 3B which lies at Z = 0 in Figs. 4A-D. As will be apparent from Figs. 4A-D, the irradiance profile increasingly departs from that of Fig. 3A as $x$ increases. It will also be noted that the extent of the profile in the $z$ direction decreases with increasing $x$ to become vanishingly small as $x$ approaches the beam radius - the tangential condition. Thus any point $P_x$ at distances $x_1$, $x_2$, $x_3$ and $x_4$ will be scanned by the irradiance profile of Fig. 4A, 4B, 4C or 4D respectively, a central axis point being scanned by the profile of Fig. 3A.

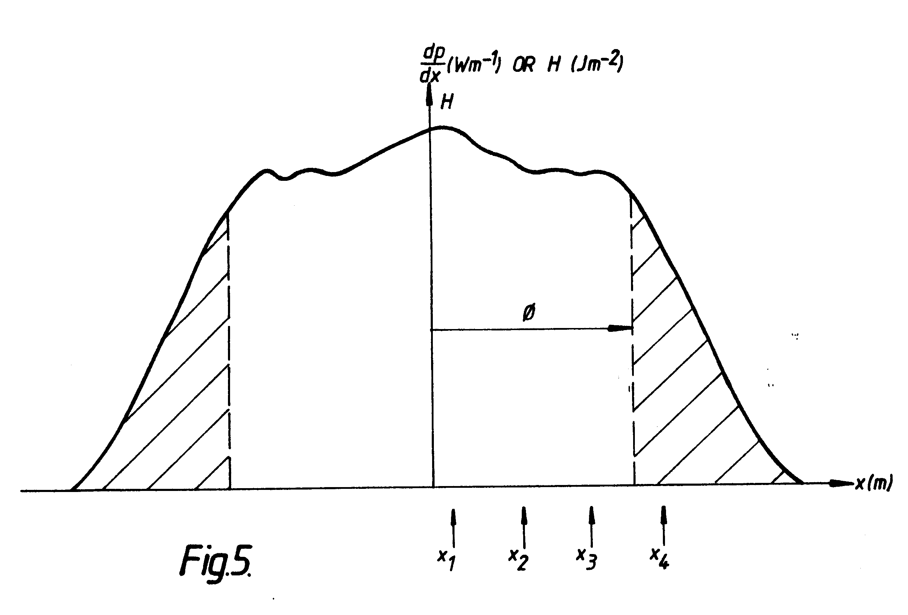

The power available to act on a single point in the path of a profile slice at the distances $x_1$, $x_2$, $x_3$, $x_4$ etc. is illustrated in Fig. 5 in which the abscissa again represents $x$. The ordinate H is the integral of the slice profile in the $z$ direction for each value of $x$ and represents the power in the slice for an arbitrarily small slice width δx. (dP/dx) or alternatively can be expressed in terms of the radiant exposure (energy per unit area deliverable) in J/m$^2$ for a point at a distance $x$ from the central axis and scanned by the pertinent slice profile as the beam moves across the material surface at constant velocity. The total energy delivered will of course depend on the beam velocity, a factor to be discussed later.

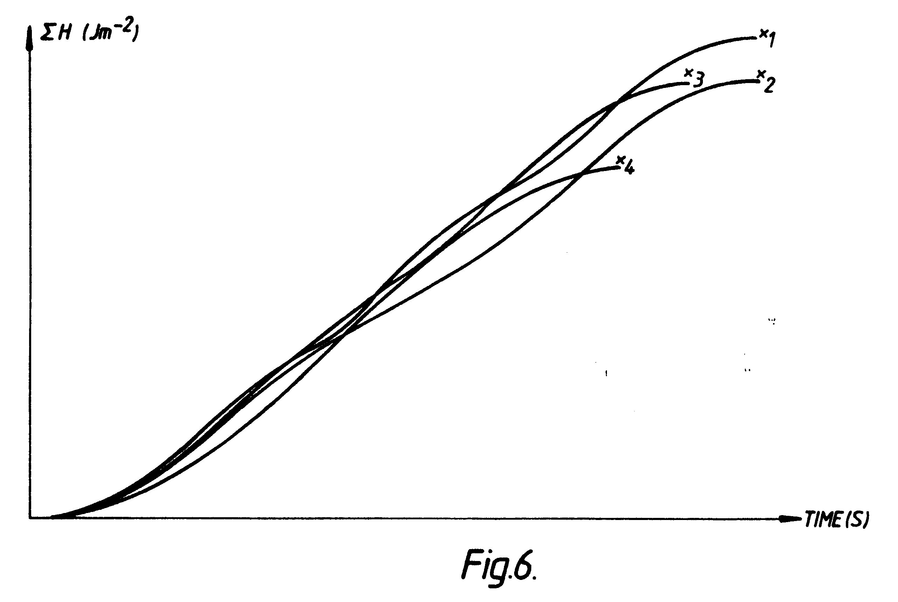

The delivery of energy to points lying at the distances $x_1$, $x_2$, $x_3$ and $x_4$ is further illustrated in Fig. 6 which shows how the total energy, ΣH, accumulates with time as the beam is scanned. From Figs. 5 and 6 it is seen that at distances $x_1$, $x_2$, $x_3$ all within the radius ø, the energies delivered and the rate at which energy is delivered are closely comparable. At $x_4$ beyond the peak of the outer ring, the energy is beginning to fall significantly.

What the foregoing shows is that the ring mode laser beam illustrated is capable of delivering a substantially uniform amount of energy to a strip of material scanned by the beam, notwithstanding the apparently widely different irradiance values available in the beam cross-section. If a strip of material surface is to receive substantially the same energy, the beam can be truncated or masked in the $x$ direction to remove the lateral margins. It is desirable that if this is done, the amount of beam power lost should not be too great. This can be expressed as truncation efficiency, that is the proportion of total beam power available when the lateral extent of the active beam is restricted to a given fraction of the diameter. The combined $TEM_{00}$ + $TEM_{01}*$ is considered favourable in this respect.

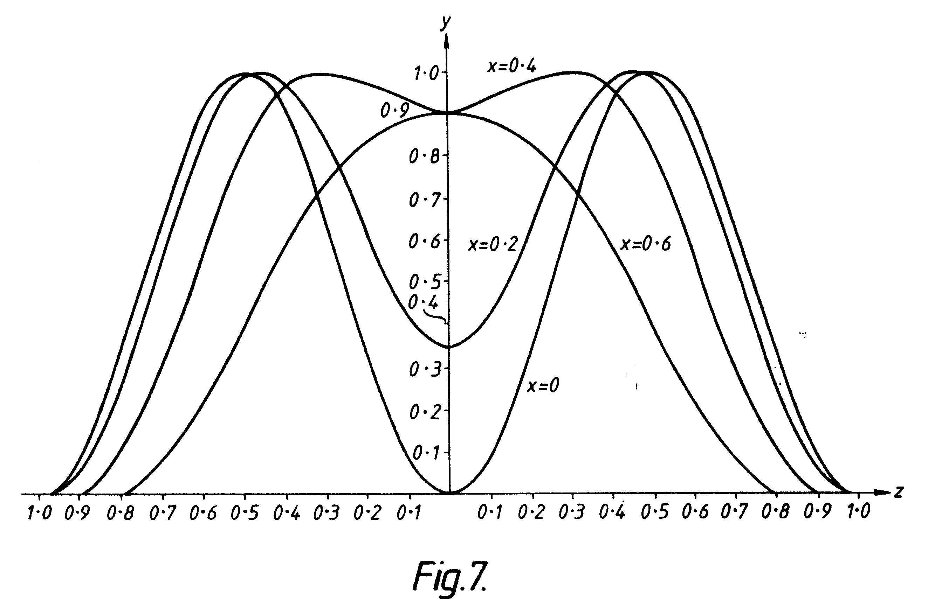

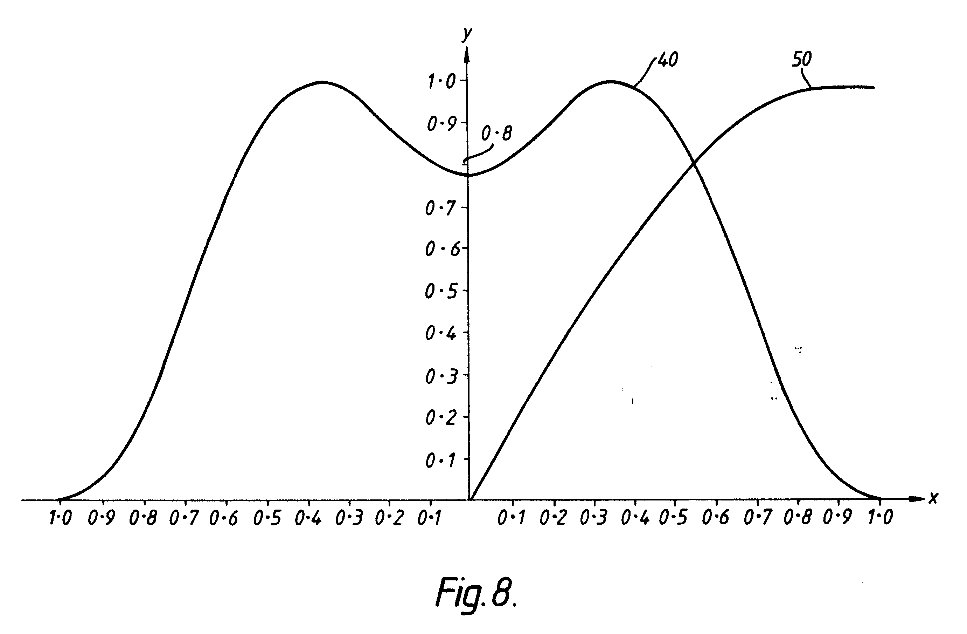

The analysis so far has considered the case where the central peak 16 does not exceed the peak of the outer ring 14 by any great amount. On one extreme is the case where the central peak entirely predominates, i.e. virtually a $TEM_{00}$ beam having a Gaussian distribution about its centre. This is no longer a ring mode. As has already been pointed out in the introductory portion of this specification, such a beam cannot combine efficient beam utilisation with uniform energy delivery to a strip of material. At the other extreme, the beam can virtually lose the central peak to just leave the outer ring. Fig. 7 shows a set of profiles in the z-axis direction for a $TEM_{01}*$ mode beam with a centre or on-axis zero. Profiles are taken for $x$ values of 0, 0.2, 0.4 and 0.6 expressed as a fraction of beam radius, the irradiance value on the y-axis being normalized to unity for the peak value. The energy deliverable along profile slices in the z-direction (also expressed as a fraction of beam radius) or to put it in other words, the power contained in slices of a width δx, is illustrated as curve 40 in Fig. 8 which is plotted in the same terms as, and should be compared with, Fig. 5. The y-axis scale in Fig. 8 is normalised to unity at the peak value. Instead of the slight peak on the axis $z_o$ in Fig. 5, Fig. 8 shows a dip on the zero axis, though for values of x to about 0.55 the uniformity of radiant exposure is about ± 10% taking the 0.9 ordinate value as the datum. The variation in exposure acceptable will depend on the particular application but the figure quoted is one presently considered reasonable, particularly in the light of experience in marking paper. It is clear, however, that a $TEM_{00}$ mode component is of benefit in obtaining a more uniform energy distribution.

Fig. 8 also shows a curve 50 which represents the truncation efficiency expressed as a fraction on the y-axis. In accord with the definition given above this is the fraction of beam power allowed through a slit of width 2x (beam diameter is 2) whose longitudinal axis lies on the $z_0$ axis: that is the curve 50 as plotted shows the fractional truncational efficiency for a slit of half-width x. The truncation efficiency at the x = 0.55 value just discussed is 0.8.

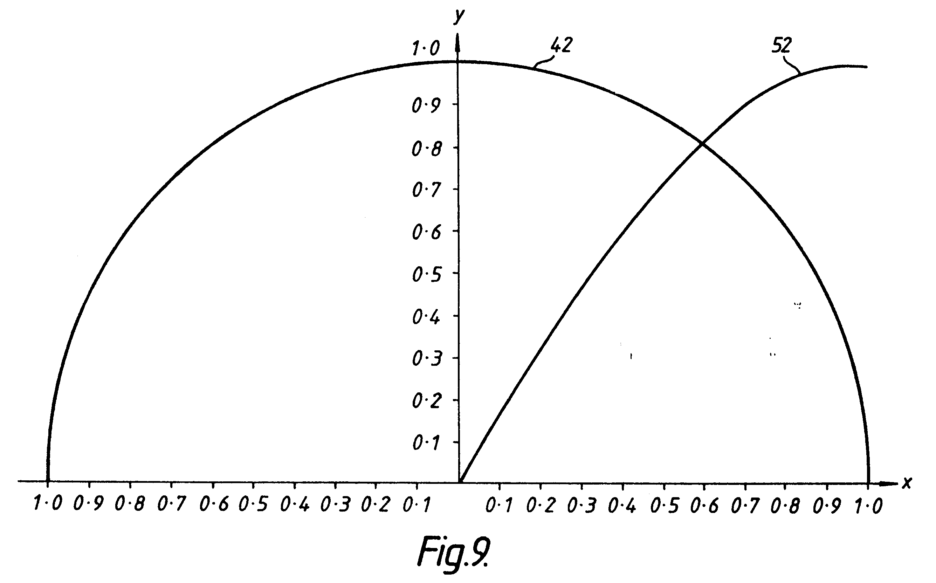

To further explore the limits of usable beam profiles, consider a theoretical profile which can be termed a "top-hat" profile. In a representation of the kind seen in Fig. 2A this profile would be a right cylinder of radius d and in a diametric profile of the kind shown in Fig. 3A would have a rectangular (flat top) profile across the full-beam diameter. Fig. 9 shows in curve 42 the power contained in slice profiles as is done in Fig. 8, and in curve 52 the truncation efficiency. For a truncated beam having the same ±10% radiant exposure about the same 0.9 datum as in Fig. 8, the slit half-width is slightly greater at 0.6, so it is a little more efficient in beam utilisation. For comparison, the embodiment of Figs. 2 and 3 provides a truncation efficiency of about 85% for a slit half-width slightly greater than 0.6.

All the examples illustrated are ring modes. The single outer ring with centre zero is the simplest case. The top-hat profile is more akin to the combined $TEM_{00}$ + $TEM_{01}*$ analysed earlier but with a uniform fill across the whole beam. It is possible to generate multi-mode beams comprising large numbers of higher-order modes which have a central circular plateau, albeit with secondary peaks imposed on this and without of course, having exactly vertical edges. What has emerged from the investigation made so far is that in addition to the ring mode itself, a central peak is beneficial: where there is a central intensity peak, the value of it should preferably be about that of the outer ring or not much in excess of it to obtain a reasonably uniform energy delivery across a major proportion of the beam width transverse to the scan direction.

The foregoing analysis of various beam profiles has demonstrated the capability of ring modes to deliver a substantially uniform amount of energy to points along the strip of material traversed by the beam over a major proportion of the beam diameter. However, it is necessary for the scanning velocity of the beam to be sufficient to achieve exposure integration. This will now be further explained.

If we take the presently preferred kind of profile such as shown in Fig. 2A ($TEM_{00}$ + $TEM_{01}*$), it is necessary that the beam sweep at a velocity such that the material surface does not respond to the fine structure of the beam profile. Investigation has shown that at low speeds paper responds to the rate of energy delivery, and for example along the $z_0$ axis would respond to the three peaks of the profile of Fig. 3A. In order to have the paper respond to the integrated energy, such as shown at 30 in Fig. 2B and in greater detail in Figs. 5 and 6, it is considered necessary to have an exposure duration less than about 10 milliseconds. This has been specifically investigated on a paper having a weight of about 50 $g/m^2$. The exposure duration is the time for which a point swept by the beam is exposed to the pertinent slice profile. The maximum exposure duration is thus along the $z_0$ axis where the profile is the full beam diameter d. The scanning velocity must therefore be in excess of d/10 m/s, where d is in mm., which is about 80 m/s in the present case.

In general in considering the exposure duration, it is required that, in the time taken for the beam to sweep across any given point on the surface of the material being treated, significant thermal relaxation effects should not have occurred, and that therefore the material responds to the total energy delivery rather than to the rate of delivery (power) during the exposure period.

In the case of marking paper which has been particularly discussed, we are concerned with the conversion of the impinging radiant energy to thermal energy which then produces an effect in a surface-adjacent zone of the material. Paper is fibrous and has a highly open structure as seen at the laser wavelength. Light will be multiply scattered by the fibres near the surface as it penetrates into the open structure and is relatively gradually absorbed and converted to heat. In addition paper is a complex material. In particular its fibrous structure can be expected to include a few percent by weight of moisture even if the paper is notionally dry. Thus any heat generated will in part at least act to drive off this water before the heat will much affect the cellulose.

In the sort of marking application mentioned earlier, the heat generated by the impinging laser beam is believed to alter the fibrous structure in some way, perhaps as a result of first evaporating moisture, before any charring of the fibres begins. This alteration of the fibrous structure may itself produce a visible mark. There may then follow a charring of the fibres but without burning them away. It has been found that by the application of exposure integration as described in this specification it has proved possible to provide a logo or similar mark on a paper web which has a good uniform, visual appearance without being unduly pronounced.

Fig. 10 diagrammatically illustrates one apparatus for generating a laser beam to sweep a material surface such as shown in Figs. 1, 2 and 2A. In Fig. 10 a laser 100 is used to generate a beam 110 that is directed along a beam path 112 to a web path 114. A material such as a paper web is tranported along this path from say one reel 116 to another 117 with appropriate rollers 118 as will be understood in the art. The path could be within a paper-making machine. The beam 110 impinges on the web path 114 and longitudinally scans the path by virtue of the web transport. The beam impinging on the web at location 120 is the unfocussed, collimated beam of ring mode structure discussed above.

The beam may be used with an imaging mask, which may involve applying an optical scanning motion to the beam itself. The use of such image scanning for marking a moving web with an unfocussed, collimated, laser beam is described in EP-A 0329438 mentioned above.

## Claims

1. A method of treating the surface (22) of material with laser energy in which a laser beam (10) is scanned (2) relative to the surface, characterised in that:

the laser beam is unfocussed at the surface,

the cross-section of the beam (10) at the surface (22) has a significant width ($L_x$) transverse to the direction of scan (2),

the cross-section of the beam (10) at the surface (22) exhibits an intensity distribution (12) distinctive of the propagation mode structure of the beam,

the mode structure comprises a ring mode (12), and

the scanning velocity of the beam (10) relative to the material is such that at any scanned point ($P_x$) on the surface (22), the thermal energy generated (30) is a function of the integral of the beam irradiance profile acting at that point as the beam traverses the point.

2. A method as claimed in Claim 1 in which said ring mode structure is circularly symmetrical.

3. A method as claimed in Claim 1 or 2 in which the intensity distribution of said mode structure comprises an outer ring (14) and a central peak (16).

4. A method as claimed in Claim 3 in which the mode structure comprises the combination of $TEM_{00}$ and $TEM_{01}*$ modes.

5. A method as claimed in any preceding claim in which the material is paper and the laser power is below a level at which significant charring occurs.

6. A method as claimed in any one of Claims 1 to 4 in which the material is paper and the exposure duration is not more than 10 milliseconds.

7. Apparatus for treating the surface of a material with laser energy comprising:

a laser (100) providing a beam with a ring mode structure (12),

a material surface receiving location (120),

means for directing the laser beam to said location as a non-focussed beam having a significant dimension in a predetermined direction,

means (116-118) for effecting a relative scanning motion between the beam (112) and a material surface (114) received at said location (120) in a direction substantially normal to said predetermined direction, said scanning-effecting means providing a scanning velocity such that at any scanned point on the material surface, the thermal energy generated is a function of the integral of the beam irradiance profile acting at that point.

8. Apparatus as claimed in Claim 7 in which said ring mode structure (12) is circularly symmetrical.

9. Apparatus as claimed in Claim 7 or 8 in which said ring mode structure (12) has an outer ring (14) encircling a central peak (16).

10. Apparatus as claimed in Claim 9 in which the mode structure comprises the combination of $TEM_{00}$ and $TEM_{01}*$ modes.

11. Apparatus as claimed in any one of Claims 7 to 10 wherein said scanning-effecting means (116-118) provides an exposure duration for any scanned point that is not more than 10 milliseconds.

## Patentansprüche

1. Verfahren zur Behandlung der Oberfläche (22) von Material mit Laser-Energie, worin ein Laserstrahl (10) relativ zur Oberfläche geführt wird (2), **dadurch gekennzeichnet,** daß:

der Laserstrahl an der Oberfläche nicht fokussiert ist, der Querschnitt des Strahls (10) an der Oberfläche (22) eine signifikante Breite (Lx) quer zur Führungsrichtung (2) aufweist, der Querschnitt des Strahls (10) an der Oberfläche (22) eine Intensitätsverteilung (12) aufweist, die für die Ausbreitungsmodusstruktur des Strahls kennzeichnend ist,
die Modusstruktur einen Ringmodus (12) umfaßt, und die Führungsgeschwindigkeit des Strahls (10) relativ zum Material derart ist, daß die an jedem abgetasteten Punkt ($P_x$) der Oberfläche (22) erzeugte thermische Energie (30) eine Funktion des Integrals des Strahlungsintensitätsprofils des Strahls ist, das an demjenigen Punkt wirkt, wenn der Strahl den Punkt überquert.

2. Verfahren nach Anspruch 1, worin die Ringmodusstruktur kreisförmig symmetrisch ist.

3. Verfahren nach Anspruch 1 oder 2, worin die Intensitätsverteilung der Modusstruktur einen äußeren Ring (14) und einen zentralen Gipfel (16) umfaßt.

4. Verfahren nach Anspruch 3, worin die Modusstruktur die Kombination von $TEM_{00}$ und $TEM_{01}*$-Modi umfaßt.

5. Verfahren nach einem der vorhergehenden Ansprüche, worin das Material Papier ist und die Laserleistung unterhalb eines Wertes ist, bei dem nennenswerte Verkohlung eintritt.

6. Verfahren nach einem der Ansprüche 1 bis 4, worin das Material Papier ist und die Exponierungsdauer nicht mehr als 10 Millisekunden beträgt.

7. Vorrichtung zur Behandlung der Oberfläche eines Materials mit Laser-Energie, umfassend:
einen Laser (100), der einen Strahl mit einer Ringmodusstruktur (12) liefert,
einen Materialoberfläche-Aufnahmeort (120),
Mittel zum Richten des Laserstrahls als nicht fokussierter Strahl mit einer signifikanten Ausdehnung in einer vorbestimmten Richtung auf den Ort,
Mittel (116 bis 118) zum Bewirken einer relativen Abtastbewegung zwischen dem Strahl (112) und einer an dem Ort (120) aufgenommenen Materialoberfläche (114) in einer Richtung, die im wesentlichen normal zur vorbestimmten Richtung ist, wobei das die Abtastung bewirkende Mittel eine derartige Abtastgeschwindigkeit vorsieht, daß die an jedem abgetasteten Punkt der Materialoberfläche erzeugte thermische Energie eine Funktion des Integrals des Profils der Strahlungsintensität des Strahls ist, das an jenem Punkt wirkt.

8. Vorrichtung nach Anspruch 7, worin die Ringmodusstruktur (12) kreisförmig symmetrisch ist.

9. Vorrichtung nach Anspruch 7 oder 8, worin die Ringmodusstruktur (12) einen äußeren Ring (14) aufweist, der einen zentralen Gipfel (16) einschließt.

10. Vorrichtung nach Anspruch 9, worin die Modusstruktur die Kombination von $TEM_{00}$ und $TEM_{01}*$-Modi umfaßt.

11. Vorrichtung nach einem der Ansprüche 7 bis 10, worin das die Abtastung bewirkende Mittel (116 bis 118) eine Exponierungsdauer für jeden abgetasteten Punkt bewirkt, die nicht mehr als 10 Millisekunden ist.

**Revendications**

1. Procédé de traitement de la surface (22) d'un matériau à l'aide d'énergie laser, dans lequel un faisceau laser (10) est déplacé (2) par rapport à la surface, caractérisé en ce que
le faisceau laser n'est pas concentré sur la surface,
la section transversale du faisceau (10) sur la surface (22) possède une largeur importante ($L_x$) transversalement à la direction de balayage (2),
la section transversale du faisceau (10) sur la surface (22) présente une répartition d'intensité (12) distinctive de la structure de mode de propagation du faisceau,
la structure de mode comporte un mode annulaire (12), et
la vitesse de balayage du faisceau (10) par rapport au matériau est telle qu'en tout point balayé ($P_x$) sur la surface (22), l'énergie thermique générée (30) est une fonction de l'intégrale du profil du flux lumineux du faisceau agissant en ce point lorsque le faisceau passe par le point.

2. Procédé selon la revendication 1, dans lequel ladite structure de mode annulaire est symétrique circulairement.

3. Procédé selon la revendication 1 ou 2, dans lequel la répartition d'intensité de ladite structure de mode comporte un anneau extérieur (14) et une crête centrale (16).

4. Procédé selon la revendication 3, dans lequel la structure de mode comporte la combinaison de modes $TEM_{00}$ et $TEM_{01}*$.

5. Procédé selon l'une quelconque des revendications précédentes, dans lequel le matériau est du papier et la puissance laser est inférieure à un niveau auquel un brûlage important se produit.

6. Procédé selon l'une quelconque des revendications 1 à 4, dans lequel le matériau est du papier et la durée d'exposition n'est pas supérieure à 10 millisecondes.

7. Dispositif de traitement de la surface d'un matériau à l'aide d'énergie laser comportant:

    un laser (100) émettant un faisceau de structure de mode annulaire (12),

    un emplacement (120) recevant la surface du matériau,

    des moyens pour diriger le faisceau laser vers ledit emplacement en un faisceau non concentré possédant une dimension importante dans une direction prédéterminée,

    des moyens (116-118) pour provoquer un mouvement de balayage relatif entre le faisceau (112) et une surface du matériau (114) reçu audit emplacement (120) dans une direction sensiblement normale à ladite direction prédéterminée, lesdits moyens provoquant le balayage assurant une vitesse de balayage telle qu'en tout point balayé de la surface du matériau, l'énergie thermique générée est une fonction de l'intégrale du profil du flux lumineux du faisceau agissant en ce point.

8. Dispositif selon la revendication 7, dans lequel ladite structure de mode annulaire (12) est symétrique circulairement.

9. Dispositif selon la revendication 7 ou 8, dans lequel ladite structure de mode annulaire (12) possède un anneau extérieur (14) entourant une crête centrale (16).

10. Dispositif selon la revendication 9, dans lequel la structure de mode comporte la combinaison de modes $TEM_{00}$ et $TEM_{01}*$.

11. Dispositif selon l'une quelconque des revendications 7 à 10, dans lequel lesdits moyens provoquant le balayage (116,118) assurent un temps d'exposition pour tout point balayé qui n'est pas supérieur à 10 millisecondes.

Fig.1.

Fig.2A.

Fig.2B.

Fig.10.

Fig.3A.

Fig.3B.

EP 0 384 582 B1

Fig.4.

Fig.5.

Fig.6.

Fig.7.

Fig.8.

EP 0 384 582 B1

Fig.9.

EP 0 384 582 B1